# EUROPEAN PATENT APPLICATION

(11) **EP 4 714 811 A1**
(43) Date of publication of application: **25.03.2026**
(21) Application number: 25203108.3
(22) Date of filing: 18.09.2025
(51) Int. Cl.: B62J 11/04

(54) **CUP HOLDER**

(30) Priority: 23.09.2024 CN 202422307478 U
(71) Applicant: Shenzhen Qianhai Lamiku Information Technology Co., Ltd., Shenzhen, Guangdong (CN)
(72) Inventor: Zhang, Bo, Shenzhen (CN); Li, Lianzeng, Shenzhen (CN); Ye, Tao, Shenzhen (CN)
(74) Representative: Mirlach, Xiaolu

(57) **Abstract**

The present invention discloses a cup holder, including a main body, a first clamping arm, and a second clamping arm, where one end of the first clamping arm and/or the second clamping arm is rotatably connected to the main body, the first clamping arm and the second clamping arm form a space for accommodating a cup body, and an elastic member is disposed at a rotating joint between the first clamping arm and/or the second clamping arm and the main body. The cup holder provided by the present invention has advantages of being compatible with cups of multiple sizes and securely fixing the cup.

## Description

### FIELD OF TECHNOLOGY

The present invention relates to the field of holders, particularly to a cup holder.

### BACKGROUND

A cup is a container used for holding liquids, commonly used for drinking tea, water, or beverages, and drinking water to replenish body hydration is essential. When people go out, there is a need to carry a cup to replenish hydration in a timely manner. However, most existing outdoor bicycles are merely provided with a cavity body for placing items or rely on a basket for carrying. Since cups are typically made of glass, plastic, or stainless steel, vibrations generated during bicycle riding cause unstable placement of the cup, easily leading to shaking, damage, or even breakage of the cup.

There is a need for a cup holder that can stably fix the cup, prevent the cup from shaking, and accommodate cups of different sizes.

### SUMMARY

A purpose of the present invention is to provide a cup holder having advantages of being compatible with cups of multiple sizes and securely fixing the cup, addressing technical problems in the prior art of unstable cup fixation and limited cup size compatibility.

The cup holder provided according to embodiments of the present application includes a main body, a first clamping arm, and a second clamping arm, where one end of the first clamping arm and/or the second clamping arm is rotatably connected to the main body, the first clamping arm and the second clamping arm form a space for accommodating a cup body, and an elastic member is disposed at a rotating joint between the first clamping arm and/or the second clamping arm and the main body.

Preferably, ends of the first clamping arm and the second clamping arm away from the main body are alternately arranged.

Preferably, a torsion spring is disposed at a rotating joint between the first clamping arm and the main body, and the second clamping arm is integrally formed with the main body.

Preferably, a rotating shaft is disposed on the main body, the torsion spring sleeves the rotating shaft, and two ends of the torsion spring in an elastic direction are connected to the main body and the first clamping arm respectively.

Preferably, a base extends from one side of the main body, and the base is configured to support the cup body.

Preferably, an accommodating member and a lower cover are disposed on one side of the base, the accommodating member is hollowed out, the lower cover is threadedly connected to the accommodating member, and a hexagonal hole is provided in a surface of the lower cover.

Preferably, the cup holder further includes a fixing member, the fixing member includes a connector and a locking member, one end of the connector is connected to the main body, the other end of the connector is connected to the locking member, and the locking member is fixed to a handlebar of a bicycle or a motorcycle.

The technical solutions provided in the embodiments of the present application can include the following beneficial effects:

The cup holder provided by the present invention includes a main body, a first clamping arm, and a second clamping arm, where one end of the first clamping arm and/or the second clamping arm is rotatably connected to the main body, the first clamping arm and the second clamping arm form a space for accommodating a cup body, and an elastic member is disposed at a rotating joint between the first clamping arm and/or the second clamping arm and the main body. An elastic member is disposed at a rotating joint between the first clamping arm and/or the second clamping arm and the main body, the first clamping arm and/or the second clamping arm secures the cup body via the elastic member to achieve a stable fixing effect, and the cup body is elastically fixed between the first clamping arm and/or the second clamping arm. An elastic clamping force exists between the first clamping arm and the second clamping arm, and the first clamping arm and the second clamping arm can elastically expand or clamp, making the space for accommodating the cup body variable, thereby accommodating cups of different sizes, with advantages of being compatible with cups of multiple sizes and securely fixing the cup.

### BRIEF DESCRIPTION OF THE DRAWINGS

To more clearly illustrate the technical solutions of the embodiments of the present invention, a brief description of the drawings used in the description of the embodiments is provided below. It is obvious that the drawings described below are some embodiments of the present invention, and for those of ordinary skill in the art, other drawings can be obtained based on these drawings without creative effort.
FIG. 1 is a schematic diagram of a three-dimensional structure of a cup holder according to the present invention.
FIG. 2 is a schematic diagram of an exploded structure of the cup holder according to the present invention.
FIG. 3 is another schematic diagram of an exploded structure of the cup holder according to the present invention.
FIG. 4 is a schematic diagram of an exploded structure of a first clamping arm of a cup holder according to the present invention.
FIG. 5 is a schematic diagram of a structure of the first clamping arm according to the present invention.
FIG. 6 is a schematic diagram of a structure of the cup holder with the first clamping arm hidden according to the present invention.
FIG. 7 is a schematic diagram of the structure in FIG. 6 from another angle.

Description of reference numerals:
10. cup holder; 20. main body; 21. rotating shaft; 30. first clamping arm; 31. torsion spring; 40. second clamping arm; 50. elastic member; 60. base; 61. accommodating member; 62. lower cover; 70. fixing member; 71. connector; and 72. locking member.

### DESCRIPTION OF THE EMBODIMENTS

The technical solutions in the embodiments of the present invention are clearly and completely described below with reference to the drawings in the embodiments of the present invention. It is obvious that the described embodiments are some, but not all of the embodiments of the present invention. Based on the embodiments of the present invention, all other embodiments obtained by those of ordinary skill in the art without creative effort fall within the scope of protection of the present invention.

It should also be understood that the terms used in the specification of the present invention are for the purpose of describing specific embodiments only and are not intended to limit the present invention. As used in the specification and the appended claims of the present invention, unless the context clearly indicates otherwise, the singular forms "a," "an," and "the" are intended to include the plural forms.

It should further be understood that the term "and/or" used in the specification and the appended claims of the present invention refers to any and all possible combinations of one or more of the associated listed items and includes such combinations.

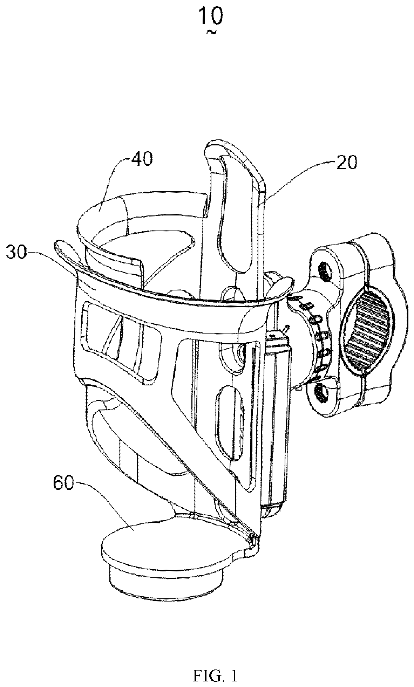

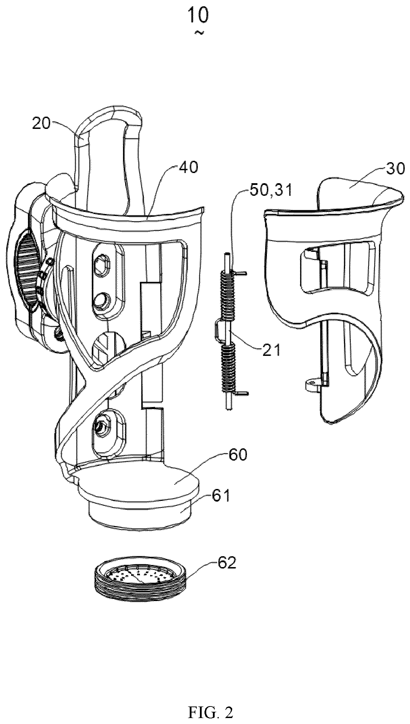

Referring to FIGs. 1 and 2, the present invention provides a cup holder 10, including a main body 20, a first clamping arm 30, and a second clamping arm 40, where one end of the first clamping arm 30 and/or the second clamping arm 40 is rotatably connected to the main body 20, the first clamping arm 30 and the second clamping arm 40 form a space for accommodating a cup body, and an elastic member 50 is disposed at a rotating joint between the first clamping arm 30 and/or the second clamping arm 40 and the main body 20.

An elastic member 50 is disposed at a rotating joint between the first clamping arm 30 and/or the second clamping arm 40 and the main body 20, the first clamping arm 30 and/or the second clamping arm 40 secures the cup body via the elastic member 50 to achieve a stable fixing effect, and the cup body is elastically fixed between the first clamping arm 30 and/or the second clamping arm 40. An elastic clamping force exists between the first clamping arm 30 and the second clamping arm 40, and the first clamping arm 30 and the second clamping arm 40 can elastically expand or clamp, making the space for accommodating the cup body variable, thereby accommodating cups of different sizes.

Ends of the first clamping arm 30 and the second clamping arm 40 away from the main body are alternately arranged, and the first clamping arm 30 and the second clamping arm 40 adopt a wrap-around design, facilitating the fixing of the cup.

In some embodiments, one of the first clamping arm 30 and the second clamping arm 40 may be rotatably connected to the main body 20, and optionally, in some other embodiments, both the first clamping arm 30 and the second clamping arm 40 are rotatably connected to the main body 20.

In this embodiment, the elastic member 50 is a torsion spring 31, a torsion spring 31 is disposed at a rotating joint between the first clamping arm 30 and the main body 20, and the second clamping arm 40 is integrally formed with the main body 20.

A rotating shaft 21 is disposed on the main body 20, the torsion spring 31 sleeves the rotating shaft 21, and two ends of the torsion spring 31 in an elastic direction are connected to the main body 20 and the first clamping arm 30 respectively.

Referring to FIG. 2, a base 60 extends from one side of the main body 20, and the base 60 is configured to support the cup body.

An accommodating member 61 and a lower cover 62 are disposed on one side of the base 60, the accommodating member 61 is hollowed out, the lower cover 62 is threadedly connected to the accommodating member 61, and a hexagonal hole is provided in a surface of the lower cover 62. Small items such as Apple's AirTag or keys can be placed in the accommodating member 61, and the AirTag helps a user to position his/her bicycle. The lower cover 62 is threadedly connected to the accommodating member 61, facilitating disassembly, and the hexagonal hole is provided in a surface of the lower cover 62, requiring the user to use a hex wrench for disassembly, thus providing an anti-theft function.

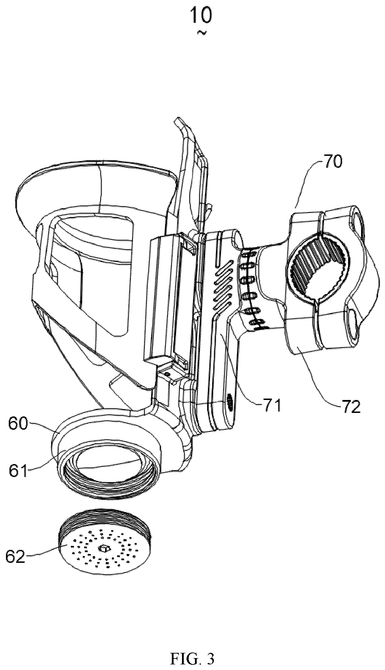

Referring to FIG. 3, the cup holder 10 further includes a fixing member 70, the fixing member 70 includes a connector 71 and a locking member 72, one end of the connector 71 is connected to the main body 20, the other end of the connector 71 is connected to the locking member 72, and the locking member 72 is fixed to a handlebar of a bicycle or a motorcycle.

The technical solutions provided in the embodiments of the present application can include the following beneficial effects:

The present invention provides a cup holder 10, including a main body 20, a first clamping arm 30, and a second clamping arm 40, where one end of the first clamping arm 30 and/or the second clamping arm 40 is rotatably connected to the main body 20, the first clamping arm 30 and the second clamping arm 40 form a space for accommodating a cup body, and an elastic member 50 is disposed at a rotating joint between the first clamping arm 30 and/or the second clamping arm 40 and the main body 20. An elastic member 50 is disposed at a rotating joint between the first clamping arm 30 and/or the second clamping arm 40 and the main body 20, the first clamping arm 30 and/or the second clamping arm 40 secures the cup body via the elastic member 50 to achieve a stable fixing effect, and the cup body is elastically fixed between the first clamping arm 30 and/or the second clamping arm 40. An elastic clamping force exists between the first clamping arm 30 and the second clamping arm 40, and the first clamping arm 30 and the second clamping arm 40 can elastically expand or clamp, making the space for accommodating the cup body variable, thereby accommodating cups of different sizes. The cup holder has advantages of being compatible with cups of multiple sizes and securely fixing the cup.

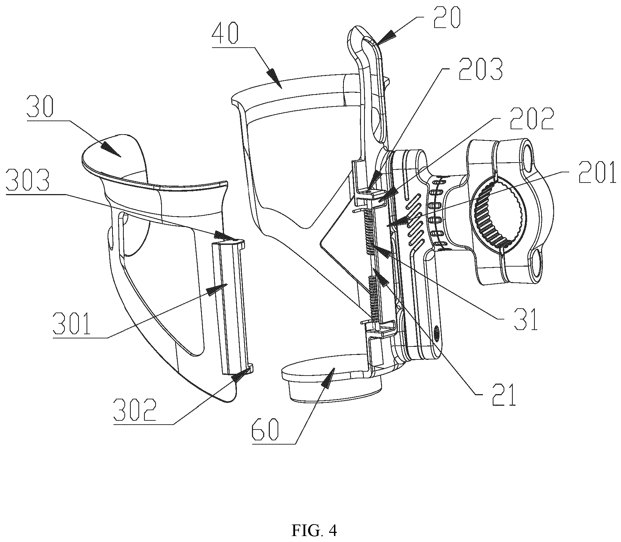

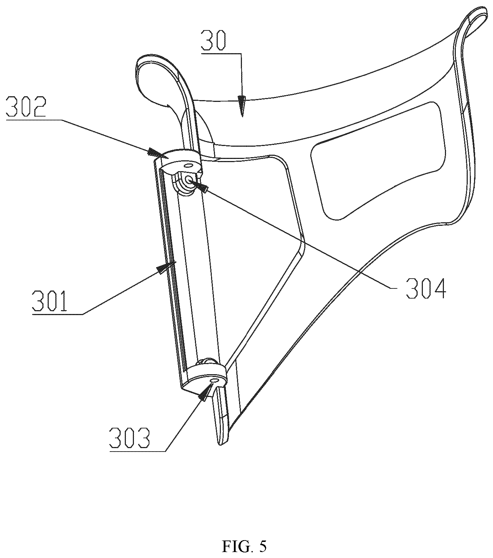

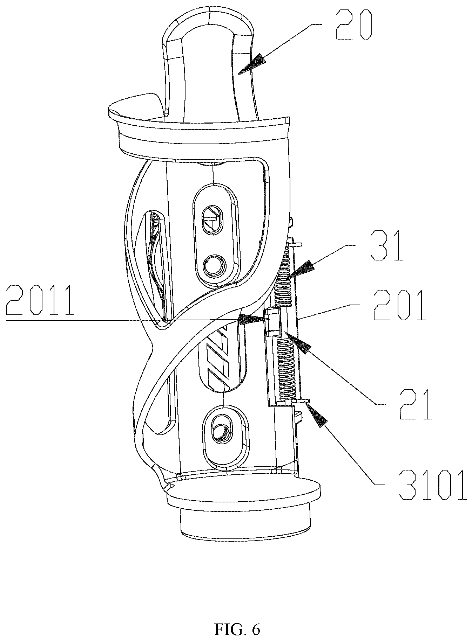

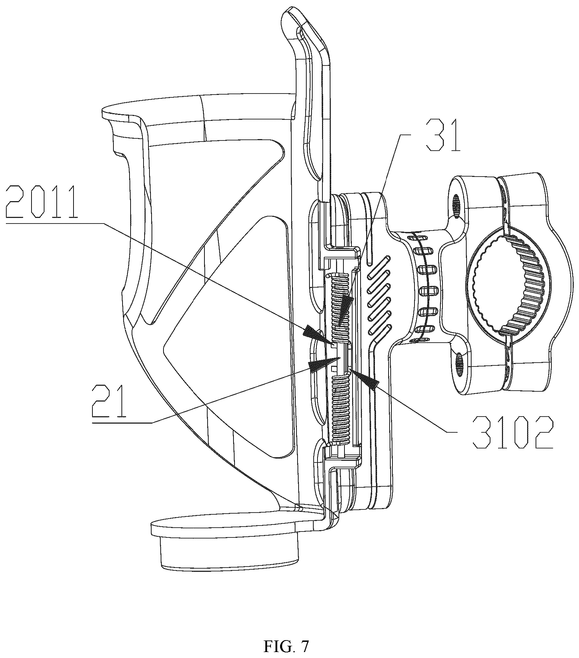

Referring to FIGs. 4 to 7, a rotating structure of the first clamping arm 30 and the main body 20 is provided.

The first clamping arm 30 includes a first rotating portion 301, and the main body 20 is provided with a second rotating portion 201 at a corresponding position. The first rotating portion 301 includes insertion portions 302 disposed at upper and lower ends, and the insertion portion 302 is provided with a first perforation 303. The second rotating portion 201 includes second perforations 203 disposed at upper and lower ends and avoidance grooves 202 disposed near the second perforations 203. During mounting, the first rotating portion 301 is inserted such that the insertion portion 302 is inserted into the avoidance groove 202, and the first perforation 303 is aligned with the second perforation 203. A rotating shaft 21 is inserted through the first perforation 303 and the second perforation 203, and the first rotating portion 301 is rotatable relative to the second rotating portion 201 through a linkage connection of the rotating shaft 21.

Further, the torsion spring 31 includes a middle limiting portion 201 and insertion portions 3101 disposed at both ends. The second rotating portion 201 is provided with a middle limiting boss 2011, and the first rotating portion 301 is provided with a slot 304. The middle limiting portion 201 of the torsion spring 31 is inserted between the limiting boss 2011 and the second rotating portion 201. The torsion spring 31 spirals in the same direction toward both ends based on the middle limiting portion 201, and the insertion portion 3101 of the torsion spring 31 is inserted into the corresponding slot 304, such that the first clamping arm 30 performs a clamping operation, and in cooperation with the second clamping arm 40, allows the cup holder to accommodate cups of different sizes, thus having advantages of being compatible with cups of multiple sizes and securely fixing the cup.

The above description is merely specific implementations of the present invention, but the scope of protection of the present invention is not limited thereto. Any person skilled in the art can easily conceive various equivalent modifications or substitutions within the technical scope disclosed by the present invention, and these modifications or substitutions should be covered within the scope of protection of the present invention. Therefore, the scope of protection of the present invention shall be subject to the scope of protection of the claims.

## Claims

1. A cup holder, comprising a main body, a first clamping arm, and a second clamping arm, wherein one end of the first clamping arm and/or the second clamping arm is rotatably connected to the main body, the first clamping arm and the second clamping arm form a space for accommodating a cup body, and an elastic member is disposed at a rotating joint between the first clamping arm and/or the second clamping arm and the main body.

2. The cup holder according to claim 1, wherein ends of the first clamping arm and the second clamping arm away from the main body are alternately arranged.

3. The cup holder according to claim 1, wherein a torsion spring is disposed at a rotating joint between the first clamping arm and the main body, and the second clamping arm is integrally formed with the main body.

4. The cup holder according to claim 3, wherein a rotating shaft is disposed on the main body, the torsion spring sleeves the rotating shaft, and two ends of the torsion spring in an elastic direction are connected to the main body and the first clamping arm respectively.

5. The cup holder according to claim 4, wherein a base extends from one side of the main body, and the base is configured to support the cup body.

6. The cup holder according to claim 5, wherein an accommodating member and a lower cover are disposed on one side of the base, the accommodating member is hollowed out, the lower cover is threadedly connected to the accommodating member, and a hexagonal hole is provided in a surface of the lower cover.

7. The cup holder according to claim 1, wherein the cup holder further comprises a fixing member, the fixing member comprises a connector and a locking member, one end of the connector is connected to the main body, the other end of the connector is connected to the locking member, and the locking member is fixed to a handlebar of a bicycle or a motorcycle.
